# EUROPEAN PATENT APPLICATION

(11) **EP 1 691 262 A1**
(43) Date of publication of application: **16.08.2006**
(21) Application number: 05100977.7
(22) Date of filing: 11.02.2005
(51) Int. Cl.: G06F 3/033, G06F 9/44

(54) **Extending context awareness to support multi-file operations**

(71) Applicant: SAP AG, 69190 Walldorf (DE)
(72) Inventor: Altenhofen, Michael, 76131 Karlsruhe (DE)

(57) **Abstract**

A computer-implemented method is presented for providing a user with entries 221, 222 of a context menu 220. The entries 221, 222 are selectable by the user for an operation of an application program requiring a plurality of files. The method comprises receiving a first identification of a first file 213 selected from a context 210 of the user and receiving a second identification of a second file 214 selected from the context 210. It follows identifying file types of the selected files 213, 214 and determining according to predefined rules an operation of an application program requiring a plurality of files. The operation of the application program is applicable to the selected files 213, 214. It further follows generating for the context menu 220 an entry 221, 222 representing the operation of the application program, wherein the operation of the application program is selectable by the user to be applied to the selected files 213, 214.

## Description

### Technical Field

The field of the invention generally relates to the field of electronic data processing and more particularly to providing a user interface to a user.

### Background and Prior Art

Some modern computer systems have reached a high level of versatility. They can be used for different and possibly demanding tasks. Typically, a user of a computer system interacts with the computer system through a user interface. The user interface provides the user with a context and the user can enter instructions through the user interface. Generally, it is desirable to have a user interface which supports an interaction between the user and the computer system.

Frequently, the user chooses to directly manage files that are available on the computer system. The files may be managed using a file manager program. The file manager program may be provided by an operating system. The file manager program for example displays files and folders to the user and provides the user with functionality for managing the files and the folders.

A user interface of the file manager program may support a graphical pointer device which is a handheld device for controlling a graphical pointer. The graphical pointer device may include one or more buttons for selecting displayed files and for selecting functions from a menu. The functions may be selectable from a context menu which is usually requested by the user. The context menu has entries that may depend on previously selected files and accordingly can support the user communicating a task to the computer system.

The user may use application programs. An application program is an individual program which performs one or more operations for the user. The application program may perform an operation with respect to a file, for example to display a text of a text file. Frequently, the user starts the application program and selects from one or more files to which the application program may apply an available function.

United States Patent, patent number 5,664,133, discloses methods to support the user by providing context menus. As an example, the user selects a document file and requests a context menu. An entry of the context may represent an optional operation to open the document file with an appropriate application program. As a further example, the user may select two computer resources, for example, a file and a folder and request the context menu. An entry of the context menu may represent an optional operation to transfer the file to the folder. As a further example, the user may select a plurality of files and request the context menu. The entries of the context menu may represent selectable operations that are applicable individually to each file of the plurality of files, that is, the entries are an intersection of sets of operations that are applicable to each file of the plurality.

The user may manage numerous files using the file manager program. The file manager program provides a context for selecting files and a context menu for selected files. It is desirable that the user interface provides means to the user of the file manager program so that the user can efficiently accomplish the task.

### Summary of the Invention

The user may apply application programs for operations that require a plurality of files as an input. It is convenient to support the user to apply the operations of the application programs to a plurality of files that are displayed by the file manager program.

A method according to an embodiment of the invention is disclosed by features of independent claim 1. An aspect of the embodiment is to provide the user with context menu entries that represent operations of application programs that require a plurality of files as an input. The entries represent operations that are selectable by the user to be applied to previously selected files.

The embodiment is fast and memory efficient because the operations represented in the context menu are generated by identifying file types and determining the operations accordingly. Frequently, a number of file types is smaller than a number of files and therefore assigning file types to operations involves less data than assigning files to operations. The file types characterize a structure of the files and the file types provide sufficient information for a determination of the applicable operations. Accordingly, it requires less data processing to determine the applicable operations by using file types instead of using files.

The embodiment reduces requirements with respect to resources of a computer system such as memory and computing performance. The reason is that the user selects the files and the operation remaining in the user context. The user is not required to change the context once or several times for selecting the application program and the operation. A change of the context requires more resources than providing the context menu with the entries.

The embodiment further reduces required resources of a computer system in case the user searches for the application program to start the application program. In the application program the user can be required to identify the operation, a location of the files, that is, where the files are for example in a hierarchical structure, and the files to which the operation of the application is applied. The user may search for identifying any of the required elements and the search of the user may consume further resources. In case the user commits an error further resources are consumed, even if the error is detected.

The entries of the context menu improve the interaction between the user and the computer system because a reduced number of applicable operations are provided. Furthermore, the user may not be aware of an applicable operation and in this case the user is informed in an efficient way about the applicable operation. Accordingly, the user of the embodiment gains a better control of the computer system when applying operations to pluralities of files.

A computer system according to a further embodiment of the invention is disclosed by features of independent claim 8. The system provides the context menu entries representing the operations of the application programs requiring the plurality of files. The system corresponds substantially to the method according to the embodiment of the invention.

According to the substantial correspondence of the system to the method, aspects of the method are also valid for aspects of the computer system.

A computer program product according to a further embodiment of the invention is disclosed by features of independent claim 11. The computer program product refers to features of the method and accordingly the aspects of the method are also valid for the computer program product.

### Brief Description of Drawinas

Fig. 1 shows method steps of a method according to the invention.

Fig. 2 illustrates three successive contexts associated to an operation of an application program requiring two files.

Fig. 3 illustrates three successive contexts associated to an operation of an application program requiring three files.

Fig. 4 illustrates three successive contexts associated to an operation of an application program requiring two document files.

Fig. 5 shows exemplary assignments of a registry file for determining an operation of an application program.

Fig. 6 shows components of a computer system according to the invention.

### Detailed Description of the Invention

The following description contains examples and embodiments of the invention that are not limiting the scope of the invention.

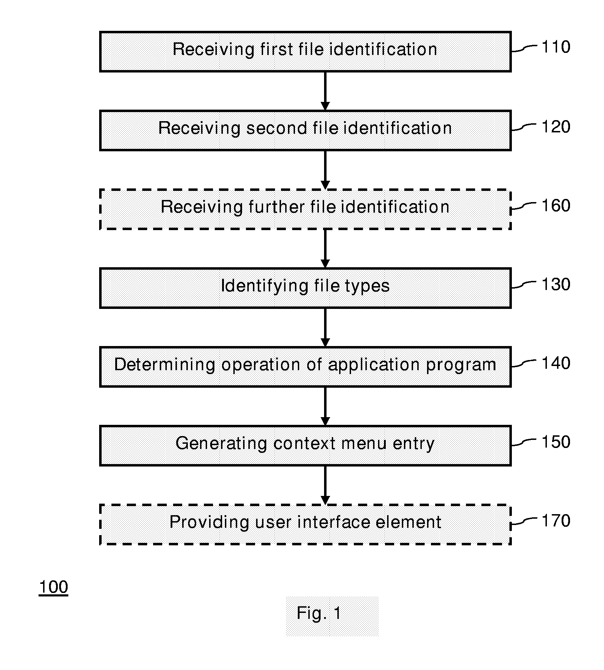

Fig. 1 shows method steps of a method 100 according to the invention. Optional method steps of the method are indicated by boxes with dashed lines. The method 100 provides entries for a context menu which is displayed to a user. The entries represent selectable operations of application programs requiring a plurality of files. The context menu refers to a context of the user. The context may be provided by a file manager program which displays files to the user. The user selects a plurality of files from the context and requests the context menu. The method determines the selectable operations that are applicable to the selected plurality of files according to predefined rules. Subsequently, the method provides the determined operations as entries to the context menu. The user may select an operation from the context menu to apply the operation to the selected files. Therefore, the user may apply the operation to the plurality of files without a major change of the context. For example, the user is not required to leave the file manager program to start the application program and select the operation. Furthermore, the user is not required to be aware of details of the operation, such as which types of files are required for the operation.

The method 100 includes step receiving 110 a first identification of a first file which is selected by the user from the context. The context includes one or more files which may be displayed by the file manager program. The files may be represented by icons or by the file names. The user may use a graphical pointer device to point to the first file and a button for selecting the first file. An example for such a graphical pointer device is a computer mouse. A request of the context menu may be done by using a further button. The selection of an entry from the context menu may be possible by using again the button which is used for selecting the files. It depends on the file manager program if a selection and the request of the context menu can be done by using the graphical pointer device. Frequently, the file manager program supports the graphical pointer device. The file manager program may also support selecting a displayed object by pressing repeatedly a first button to navigate a file indicator to the first file and by using a second button to select the first file. A user interface may register the selection of the first file and the file manager program may provide the first identification to the method. Typically, the first file will be marked so that a selection of the first file is visible.

A following method step is receiving 120 a second identification of a second file which is selected by the user from the context. The selection of the second file may be done in an analogous way to the selection the first file.

A following method step is identifying 130 file types of the selected files. A file type may be identified for example by identifying an extension of a file. The extension of the file is a part of a name of the file. The part starts with a dot within the name of the file. Frequently, the file manager program provides operations requiring one file to the user and the operations are determined according to the file extension. Such an operation may be started by a double click of a button. As an example, a word processor program may be applied to open a file with an extension for a document file.

It follows determining 140 according to predefined rules an operation of an application program. The operation requires a plurality of files, that is, it is a multiple-file operation. For example, an operation of comparing two files by displaying the two files and highlighting the differences requires two files as an input. The operation of the application program is applicable to the selected files, that is, the determined operation requires files of file types which are identical with the identified file types. Frequently, an operation of an application program requires one or more specific file types and it is applicable only to files of the specific file types. The determining step involves the identified file types and does not require an identification of a selected file. Accordingly, the determining step is independent of the number of the files available from the context.

It follows method step generating 150 an entry for the context menu. The entry represents the operation of the application program. The operation of the application program is selectable by the user so that the operation is applied to the selected files.

Upon receiving 120 the second file identification, an optional step may be executed: receiving 160 one or more further file identifications of files selected from the context. The user may desire to apply an operation of an application program that requires more than two files. The selection of the further files may be done in an analogous way to the selection the first and second files.

Upon generating 150 an entry for the context menu, a further optional step may be executed: providing 170 the user with a user interface element for inputting information required for the operation of the application program. For example, the operation of comparing two files may require a further file for saving a result of the comparing operation. In such a case the interface element may provide a means for inputting a name of a file to which the result is saved.

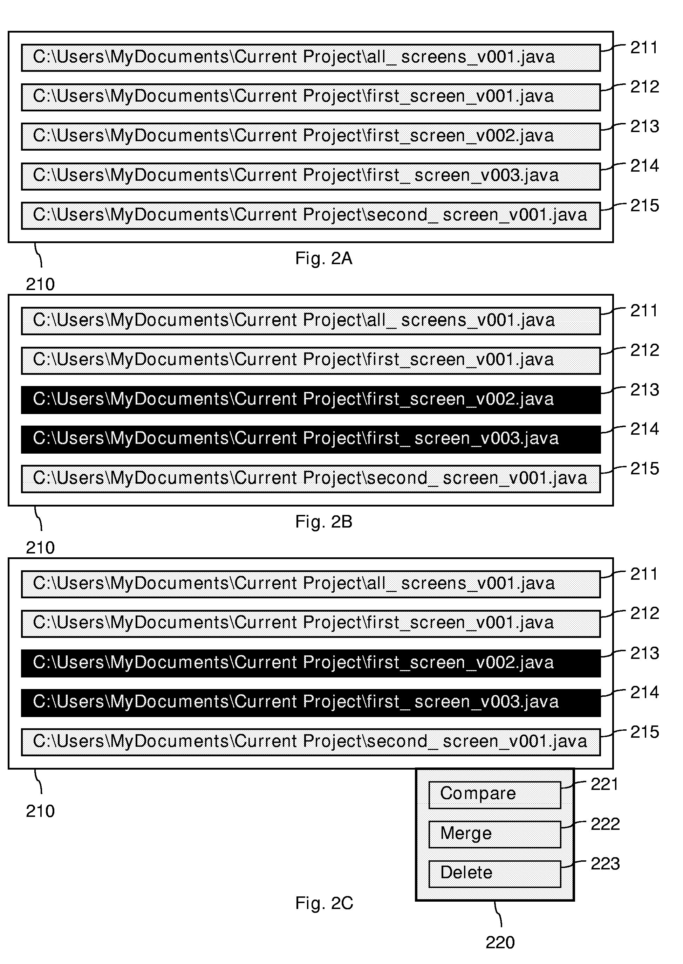

Fig. 2A - 2C illustrate three successive contexts associated to an operation of an application program requiring two files. The three situations illustrate a typical sequence of displays that result from an interaction of the user with the file manager program.

Fig. 2A shows an exemplary context element 210 of an exemplary file manager program. The context element 210 displays five files 211-215 with file paths to the user. A file path of a file describes a location of the file in a hierarchical structure of files on a computer resource such as a hard disc drive. The file paths of the displayed files are identical. Names of the displayed files are different but extensions of the files are identical. The context may be displayed to a developer of a software program written in a programming language called Java. The displayed files represent different parts of the software program and they represent different versions of a part of the software program: file 211 represents a program part different from file 212 and file 215, and files 212, 213, and 214 represent different versions of the same program part. A number of files provided by a computer system may be very large. The context with the context element 210 may be particularly created by the developer because the displayed files are relevant for a specific task of the developer. Accordingly, the developer may not want to change the context to apply an operation of an application program.

Fig. 2B shows the context element 210 with the files 211-215. The user has selected files 213 and 214 which are visibly marked, for example, by different colors. The user selected the files 213 and 214 to apply an operation to them.

Fig. 2C shows the context element 210 with the files 211-215 and with a further context menu 220. The context menu 220 is part of a new context but most parts of the new context are identical with a previous context. The user is not required to grasp numerous new interface elements and understand them. The user is not required to search for a menu offering an operation. The user can continue to apply an operation by selecting a displayed context menu entry. The user has requested the context menu 220 and is provided with a compare entry 221, a merge entry 222, and a delete entry 223. The compare entry 221 represents a compare operation of an application program. In case the user selects entry 221 the operation compares the two selected files 213 and 214. The merge entry 222 represents a merge operation that may for example merge content parts of a first file that differ from a content of a second file with the content of the second file. The first file and the second file of the merge operation may be determined in accordance with a sequence with which the user selects the files. In a further example, a further merge operation may require a third file to which a result of the further merge operation is saved without changing the content of the second file. In this case an embodiment of the invention may display a further interface element so that the user can input a name of the third file. In the example, the delete entry 223 is not an operation of an application program requiring two files. Instead, the delete entry 223 is an example of prior art. It may be a frequent situation that some entries of the context menu are generated according to an embodiment of the invention and that other entries of the context menu are generated according to prior art. The delete operation may be executed by the file manager program. The delete operation requires one file and can be applied to two files by applying it twice individually to each file of the two files. The result of selecting the delete entry 223 can be obtained by selecting one file and delete the one file and repeating the procedure for a second file.

Following an execution of an operation the user can continue with a task requiring the context element 210. The user is not required to change the context and to recreate the context element 210.

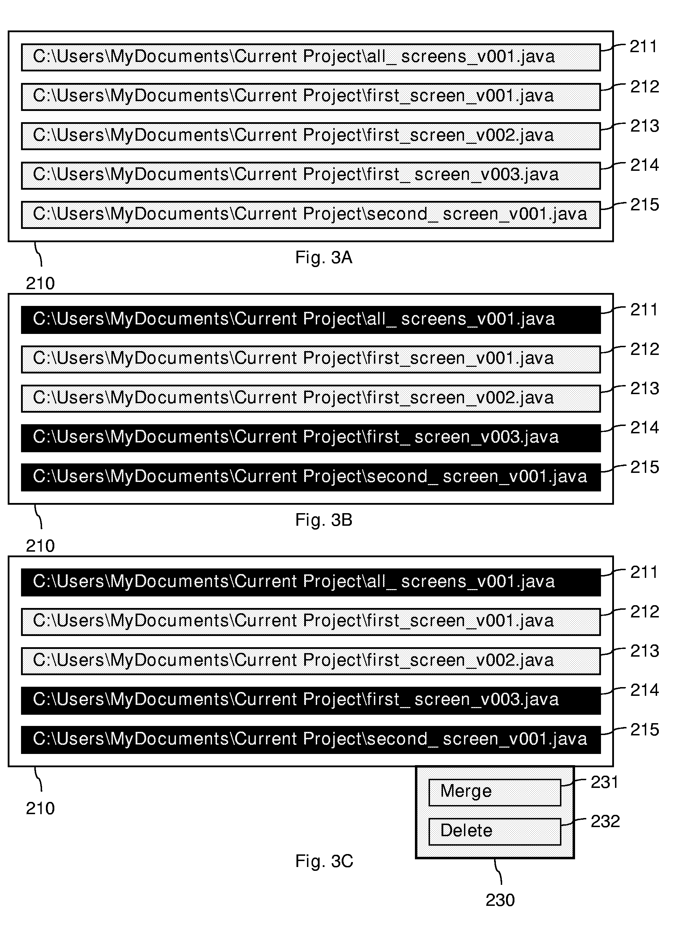

Fig. 3A - 3C illustrate three successive contexts associated to an operation of an application program requiring three files. The three contexts have the context element 210 with the files 211-215. Fig. 3A displays an identical situation as Fig. 2A. It follows Fig. 3B showing that the user has selected three files 211, 214, and 215. The user requests the context menu and in Fig. 3C the context displayed with the context menu 230. The context menu 230 has a merge entry 231 and a delete entry 232. The merge entry represents the further merge operation requiring three files to merge the contents of a first file with a contents of second file and save the result to a third file. In contrast to the merge entry 222 (Fig. 2C) the further merge operation is determined when three files are selected. Accordingly, no further interface element for the third file is required for applying the further merge operation using merge entry 231. In the context menu 230, there is no compare entry because a compare operation in the example may require two files. As in a Fig. 2C, the delete entry 232 represents a multiple execution of the delete operation requiring one file.

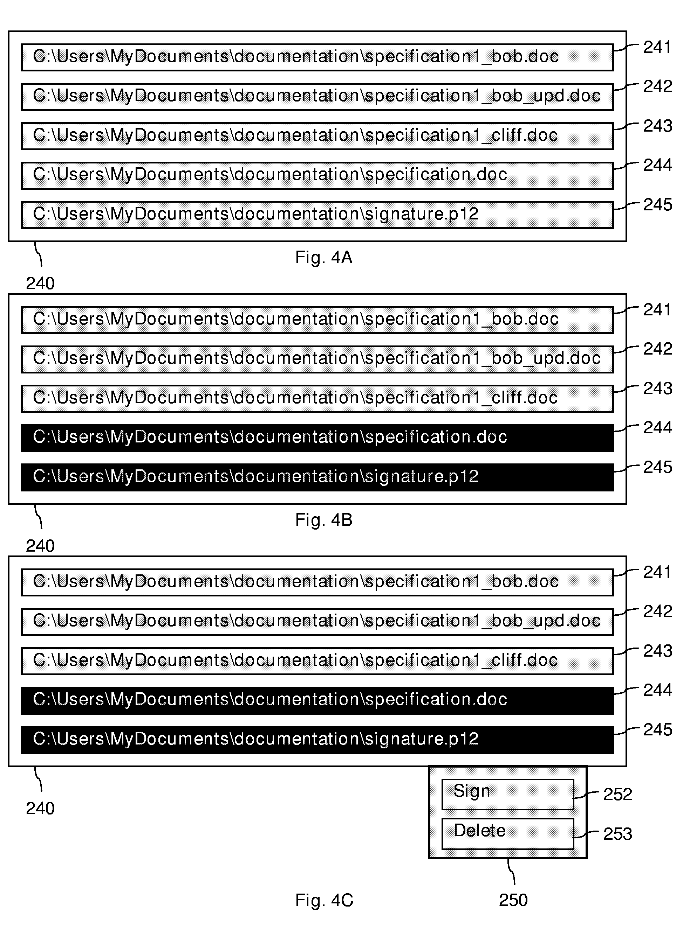

Fig. 4A - 4C illustrates three successive contexts associated to an operation of an application program requiring two document files. The contexts may be displayed to a developer of a software program working with document files. Fig. 4A shows an exemplary context element 240 of the file manager program. The context element 240 displays five files 241-245 with file paths to the user. Files 241-244 are document files which may contain text and figures. The document files are identified by a common file extension. File 245 contains data for a digital signature. Fig. 4B shows the context element 240 with the files 241-245. The user has selected files 244 and 245 which are visibly marked to apply an operation to them. Fig. 4C shows the context element 240 with the files 241-245 and with a further context menu 250. The context menu 250 has two entries. A sign entry 252 represents a sign operation which signs a first file with a digital signature of a second file. A delete entry 253 provides the multiple, individual execution of the delete operation to the selected files 244 and 245.

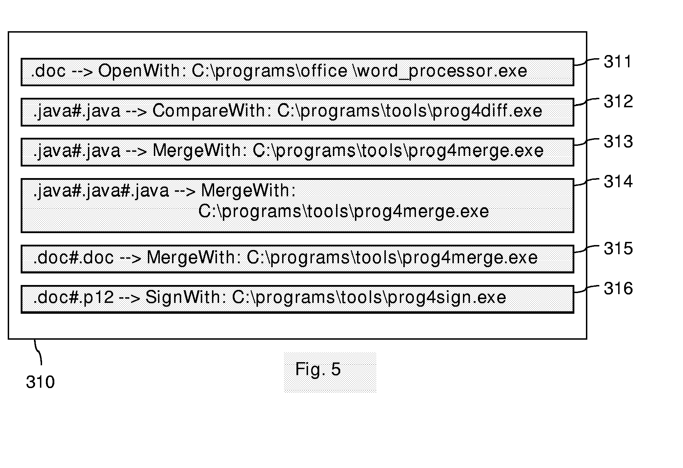

Fig. 5 shows exemplary assignments 311-316 of a registry file 310 for determining an operation of an application program. Generally, an assignment is an example of a predefined rule. The assignment assigns a specification of one or more file extensions to an operation of an application program, a path of the application program, and the application program. A file extension is used to identify a file type. The path of the application program and the application program enable the computer system to find and to execute the application program. The registry file 310 contains the assignments 311-316 for determining the entries for the context menu. Assignment 311 assigns a file extension ".doc" to an operation open, to a path "C:\programs\office\" describing the location of an application program and an application program "word_processor.exe". The application program is an executable application program. The assignment 311 is associated to an operation of opening a document file and accordingly the operation requires one file. Assignment 312 assigns file extensions to the operation of comparing two files, a path "C:\programs\tools\", and an application program "prog4diff.exe". The two files are required to have a file extension ".java". The assignment 312 may be used to identify the compare operation represented by the compare entry 221 (Fig. 2C). Assignment 313 assigns two file extensions ".java" to the merge operation, a path "C:\programs\tools\" and an application program "prog4merge.exe". The assignment 313 may be used to identify the merge operation represented by the merge entry 222 (Fig. 2C). Assignment 314 assigns three file extensions to the merge operation, the path and the application program of the assignment 312. The assignment 314 may be used to identify the merge operation represented by the merge entry 231 (Fig. 3C). Assignment 315 assigns two file extensions specifying a document to the merge operation, the path and the application program of the assignment 312. The application program "prog4merge.exe" is applicable to merge two files with the ".java" extension and to merge two files with the ".doc" extension. Assignment 316 assigns two file extensions specifying a document and a file containing a signature to the sign operation, the path and the application program. The assignment 316 may be used to identify the merge operation represented by the merge entry 252 (Fig. 4C).

A further embodiment may identify the file types in a different way. The further embodiment may include a mapping of the file extensions to the file type. Therefore, the file type may be associated to one or to more than one file extension. The mapping of the file extensions to the file type may for example be stored in a file that can be accessed by the file manager program. The mapping may also be modifiable by the user or a system administrator for example to add a new file type or to add a mapping of a file extension to a file type. The further embodiment may use abstract assignments to assign the file types to the operation of the application program, the path of the application program and the application program. An abstract assignment specifying file types may be used to replace a plurality of assignments specifying file extensions. For example, a first file extension and a second file extension may be compared with an application program. The first and the second file may also be merged with a further application program. In the further embodiment the first and the second file extension may be mapped to one file type. Accordingly, an abstract assignment specifying the one file type may represent two assignments specifying the first and second file extension. Therefore, abstract assignments may reduce the total number of assignments and abstract assignments. The abstract assignments may also be stored in a file which is accessible by the file manager program and modifiable by the user or the system administrator. The file type may be identified by identifying the file extensions of the selected files and identify the file types of the identified file extensions using the mapping. Furthermore, the further embodiment may determine the operations by selecting the operations from the abstract assignments that specify the identified file types. The further embodiment may be convenient in case that a plurality file extensions can be used for a plurality of operations.

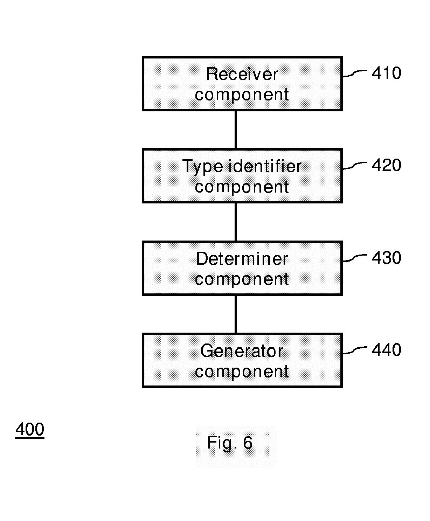

Fig. 6 shows components of a computer system 400 of the invention. The computer system is a further embodiment of the invention. Boxes of the figure represent the components of the computer system 400. Lines connecting two boxes represent interfaces between two components represented by the two boxes. The computer system can provide the user with entries 221, 222 (Fig. 2) of the context menu 220 (Fig. 2). The entries are selectable by the user for an operation of an application program requiring a plurality of files. The system 400 comprises a receiver component 410 configured to receive identifications of files 213, 214 (Fig. 2) selected from the context of the user. A type identifier component 420 is configured to identify file types of the selected files of which identifications have been received by the receiver component 410. The file types may be identified by the type identifier component 420 by identifying the file extension of the selected files. A determiner component 430 is configured to determine according to predefined rules an operation of an application program requiring a plurality of files. The operation of the application program is applicable to the selected files identified by the type identifier component 420. In case that the file types have been identified by the file extensions the determiner component 430 may be configured to determine the operation by selecting the operation from at least one assignment 312-316 (Fig. 5). The at least one assignment specifies the identified file extensions. Generally, an assignment is a predefined rule assigning a specification of one or more file extensions to an operation of an application program, a path of the application program, and the application program. A generator component 440 is configured to generate an entry for the context menu, wherein the entry represents the operation of the application program. The operation of the application program is selectable by the user to be applied to the selected files. The system may also determine more than one applicable operation and generate more than one entry representing the more than one applicable operation.

Method steps of the embodiment of the invention can be performed by one or more programmable processors executing a computer program to perform functions of the invention by operating on input data and generating output. The method steps can also be performed by, and system components of the further embodiment of the invention can be implemented as, special purpose logic circuitry, for example, an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, for example, EPROM, EEPROM, and flash memory devices; magnetic disks, for example, internal hard disks or removable disks; magneto-optical disks; and CD-ROM and DVD-ROM disks. The processor and the memory can be supplemented by, or incorporated in special purpose logic circuitry.

## Claims

1. A computer-implemented method for providing a user with entries (221, 222) of a context menu (220), wherein the entries (221, 222) are selectable by the user for an operation of an application program requiring a plurality of files; the method comprising:
receiving (110) a first identification of a first file (213) selected from a context (210) of the user;
receiving (120) a second identification of a second file (214) selected from the context (210);
identifying (130) file types of the selected files (213, 214);
determining (140) according to predefined rules an operation of an application program requiring a plurality of files, wherein the operation of the application program is applicable to the selected files (213, 214); and
generating (150) for the context menu (220) an entry (221, 222) representing the operation of the application program, wherein the operation of the application program is selectable by the user to be applied to the selected files (213, 214).

2. The method of claim 1 further comprising: upon having received (120) the second identification of the second file, receiving (160) one or more further identifications of files selected from the context.

3. The method of claim 1 or 2 further providing (170) the user with a user interface element for inputting information required for the operation of the application program.

4. The method of any one of the previous claims wherein identifying (130) the file types of the selected objects comprises identifying file extensions of the selected files.

5. The method of any one of the previous claims wherein determining (140) the operation of the application program comprises selecting the operation of the application program from at least one assignment (312-316) that specifies the identified file extensions, wherein an assignment (312-316) is a predefined rule assigning a specification of one or more file extensions to an operation of an application program, a path of the application program, and the application program.

6. The method of claim 4 wherein the assignment is stored on a registry file (310) of an operating system, wherein the registry file (310) contains assignments (311-316) for determining entries for the context menu.

7. The method of any one of the previous claims wherein the operation of the application program is any one of the following operations: a comparison of two files of an application program that provides a comparison functionality, a merge of two files of an application program that provides a merge functionality, and a signing of a document with a digital signature from a further document of an application program that provides a signing functionality.

8. A computer system for providing a user with entries (221, 222) of a context menu (220), wherein the entries are selectable by the user for an operation of an application program requiring a plurality of files; the system comprising:
a receiver component (410) configured to receive identifications of files (213, 214) selected from a context (210) of the user;
a type identifier component (420) configured to identify file types of the selected files (213, 214) of which identifications have been received by the receiver component (410);
a determiner component (430) configured to determine according to predefined rules an operation of an application program requiring a plurality of files, wherein the operation of the application program is applicable to the selected files (213, 214) identified by the type identifier component (420); and
a generator component (440) configured to generate for the context menu (220) an entry (221, 222) representing the operation of the application program, wherein the operation of the application program is selectable by the user to be applied to the selected files (213, 214).

9. The system of claim 8 wherein the type identifier component (420) is configured to identify a file type of a selected file by identifying a file extension of the file.

10. The system of claim 9 wherein the determiner component (430) is configured to determine the operation of the application program by selecting the operation of the application program from at least one assignment (312-316) that specifies the identified file extensions, wherein an assignment is a predefined rule assigning a specification of one or more file extensions to an operation of an application program, a path of the application program, and the application program.

11. A computer program product with computer instructions that cause a processor means of a computer system to execute the steps according to any one of the method claims 1 to 7.
